# EUROPEAN PATENT SPECIFICATION

(11) **EP 3 834 244 B1**
(45) Date of publication and mention of the grant of the patent: **15.06.2022**
(21) Application number: 19782473.3
(22) Date of filing: 09.08.2019
(51) Int. Cl.: H01M 8/04089, H01M 8/04111, H01M 8/04119, H01M 8/04291, H01M 8/0612, H01M 8/04014, H01M 8/124, F01D 15/00

(54) **SOFC SYSTEM WITH ANODE OFF-GAS RECIRCULATION**
SOFC-SYSTEM MIT ANODENABGASREZIRKULATION
SYSTÈME SOFC AVEC RECIRCULATION DES GAZ D'ÉCHAPPEMENT D'ANODE

(30) Priority: 09.08.2018 EP 18188237
(43) Date of publication of application: 16.06.2021
(73) Proprietor: SOLIDpower SA, 1400 Yverdon-les-Bains (CH); ECOLE POLYTECHNIQUE FEDERALE DE LAUSANNE (EPFL), 1015 Lausanne (CH)
(72) Inventor: WUILLEMIN, Zacharie, 1096 Cully (CH); FAVRAT, Daniel, 1066 Epalinges (CH); SCHIFFMANN, Jürg, 3012 Bern (CH); VAN HERLE, Jan, 1027 Lonay (CH); WAGNER, Patrick, 2000 Neuchâtel (CH)
(74) Representative: Schneiter, Sorin
(86) International application number: PCT/EP2019/071465
(87) International publication number: WO 2020/030796

(56) References cited:
- WO-A1-2016/087389
- GB-A- 369 781
- KR-A- 20130 115 895
- US-A1- 2012 304 619
- US-A1- 2012 328 968
- US-A1- 2015 188 173
- US-A1- 2017 184 020
- US-A1- 2017 298 830
- US-B1- 6 351 940

## Description

### Technical Field

The present invention relates to an SOFC (Solid Oxide Fuel Cell) system and to methods of operating an SOFC system and producing electricity, heat and steam using an SOFC. The invention also relates to a method for propelling a turbine and/or a fan, blower and/or compressor for transporting one or more selected from fuel, air and/or off-gas, such as anode off-gas and/or cathode off-gas.

### Background Art and Problems Solved by the Invention

An SOFC is a device for directly converting the chemical energy of a fuel into electrical energy and heat. Generally, a hydrocarbon fuel is reformed in a reformer to provide a hydrogen rich fuel stream and the hydrogen rich fuel stream is oxidized in a fuel cell. A stream of anode exhaust and an oxidant stream comprising cathode exhaust and air are combusted in the burner. The fuel cell power plant allows indirect control of the burner flame temperature in that the composition of the oxidant stream are controlled to maintain the oxygen content of the burner exhaust stream within a predetermined range and thus maintain the flame temperature of the combustion mixture within a preferred range.

WO 2016/087389 is illustrative as the steam reforming reaction and the water gas shift reaction are described. In this disclosure anode exhaust gas and cathode exhaust gas are kept separate, and the burner is supplied with fresh air so as to improve control and hence efficiency of the combustion in the burner. Thanks to this system, the flows of the anode and cathode exhaust streams may be kept low, such that a smaller condensing heat exchanger is required to separate and condense water from the remaining of the anode exhaust. The separated water is fed back into the system and in particular used in the steam reforming unit.

WO 2013/154353 discloses an SOFC system comprising an anode off-gas recirculation system using a turbocharger. In this disclosure, steam is produced by heating water from an external source using the heat generated in a portion of the anode off-gas. The steam is used to drive a "turbocharger" comprising a turbine propelled by the steam and a fan driven by the turbine. After driving the turbine, the steam may be used to heat air and hydrocarbon gas which are fed to the cathode and anode of the SOFC, respectively. In systems such as disclosed in WO2013/154353, it is known to recirculate a portion of the anode off-gas and mixing the anode off-gas with the fuel so as to provide the steam required for the production of the hydrogen rich gas in the reformer.

An objective of the present invention is to further improve the existing systems. For example, it is an objective of the invention to provide a system that is operational without an external source of deionized or tap water and/or without a water treatment or filtering entity for removing impurities from condensed water produced in the system. It is noted that the above objective generally applies during the continuous operation of the system. For start-up, external supply of deionized water to the reformer may be required. It is noted that (deionized) water is formed when hydrogen gas reacts with oxygen ions in the anode part of the fuel cell, said oxygen being taken from the air on the cathode side. It is an objective to provide a system having an anode-off gas recirculation into the reformer without requiring an electrical-driven pump or a separate water supply during operation of the system.

Furthermore, it was observed that the oil in oil-lubricated bearings of turbines such as disclosed in WO2013/154353 is transferred from the bearing to the recirculated off-gas and reaches the reformer and the anode, where it negatively affects reformer and anode life time. It is also known to use ball bearings for turbines such as those disclosed in WO2013/154353. Such bearings require maintenance and are of short lifetime in particular in cases where the revolution speed of the turbine is high, for example higher than 1000 turns per second or around 3000 rounds per second. It is noted that the smaller the installation, the higher the revolution speed. For comparatively small scale SOFC systems conceived for producing about 0.5 to 20 kWh, turbines capable of exhibiting high revolution, with comparatively low costs of maintenance would be preferred.

P. Wagner et al. J. Electrochem. En. Conv. Stor. 14(1) 2017 disclose the "Modelling and Designing of a Radial Anode Off-Gas Recirculation Fan for Solid Oxide Fuel Cell Systems". In view of currently existing systems, the present invention aims at increasing electrical net efficiency and/or the life-time of an SOFC in an SOFC system.

US 2015/0188173 discloses the removal of liquid water from the anode "tail gas", and recycling the removed water into an inlet fuel stream. The removed water may in particular be heated by a boiler to form steam which is then transferred to the reformer 30 by way of blowers.

US 2012/0328968 discloses a fuel cell system for a vehicle comprising a gas-lubricated, coaxial turbine-compressor assembly associated with the cathode air stream and used to pump supply air into the cathode via a compressor and to use the cathode off-gas to drive the an expander turbine. A motor is required to drive the compressor.

The present invention addresses the problems depicted above.

### Summary of the Invention

The above-identified objectives and problems are solved by a Solid Oxide Fuel Cell (SOFC) system comprising the features of the appended independent claims and optionally of the independent claims.

In an aspect, the invention relates to systems, devices and methods for propelling a turbine and a fan, blower and/or compressor for transporting one or more selected from fuel, air, and/or off-gas, such as anode off-gas and/or cathode off-gas, preferably in an SOFC system.

In an aspect, the invention provides an SOFC system comprising: an SOFC having an anode and a cathode; a fuel inlet arranged to supply fuel to the anode; an air inlet arranged to supply air to the cathode; a first valve or splitter provided downstream said anode, said first valve being arranged for separating first and second portions of an anode off-gas emitted form said anode outlet; an anode off-gas recirculation assembly, circuit or duct branching from said first valve and arranged for receiving said second portion of anode off-gas; an evaporator assembly arranged for producing steam from water; a turbine-fan assembly comprising: a steam-driven rotatable turbine and a rotatable fan, coaxially connected to said turbine, wherein said fan is arranged so as to transport said second portion of anode off-gas towards a second valve or mixer, where said second portion of anode off-gas is mixed with fuel from said fuel inlet.

Preferably, the SOFC system further comprises a condenser, arranged for condensing water contained in said off-gas gas, a conduct for feeding said condensed water to said evaporator assembly, and a conduct form feeding said steam to said turbine for driving said turbine and thereby driving said turbine-fan assembly.

In an aspect, the invention provides a method for operating an SOFC system comprising:
- reforming a gaseous fuel and steam into a hydrogen rich gas;
- electrochemically reacting said hydrogen rich gas and a cathode air stream in an SOFC to generating electricity, heat and steam; separating an anode off-gas comprising steam resulting from said electrochemical reaction into at least first and second portions;
- operating a turbine-fan assembly comprising rotatable turbine and a rotatable compressor;
- bringing about the transport of said second portion of anode off-gas with said fan and mixing said second portion of anode off-gas with said gaseous fuel, thereby providing said steam for reforming the gaseous fuel;
- condensing steam contained in said first portion of said anode off-gas, and separating anode-off-gas from water obtained by said condensation;
- evaporating said water so as to obtain steam; and,
driving said turbine with said steam.

In an aspect, the invention provides the use of de-ionized water (H₂O) produced in an anode of an SOFC for propelling a turbine, a fan, blower and/or a compressor.

In an aspect, the invention provides the use of de-ionized water produced in an anode of an SOFC for producing steam, propelling a turbine, a fan, blower and/or a compressor using said steam, and for bringing about the transport of one or more selected from gaseous fuel, air, and off-gas, such as anode-and/or cathode off-gas using said turbine, blower, and/or fan.

In an aspect, the invention provides the use of de-ionized water (H₂O) produced in an anode of an SOFC for lubricating the bearing of a fan, blower and/or a compressor, in particular a bearing of a turbine-fan assembly.

In an aspect, the invention provides the use of de-ionized water produced in an anode of an SOFC for producing steam and for lubricating a gas-lubricated bearing of a fan, blower and/or compressor with said steam.

In an aspect, the invention provides a method for propelling a turbine and/or a fan for transporting one or more selected from a fuel, air, and off-gas, such as anode-and/or cathode off-gas, the method comprising producing steam from de-ionized water produced in an anode of an SOFC and propelling said turbine and/or fan using said steam.

Further aspects and preferred embodiments of the invention are provided in the appended claims and in the description of preferred embodiments herein below.

Further features and advantages of the invention will become apparent to the skilled person from the description of preferred embodiments given below. These embodiments are provided by way of examples and the present invention is not intended to be limited to the particular embodiments as illustrated in the figures.

### Brief Description of the Drawings

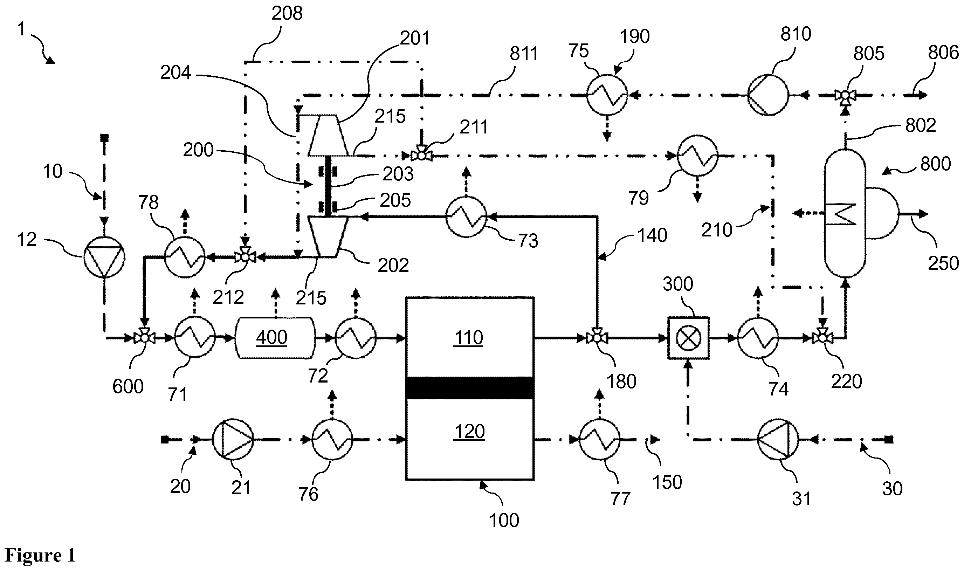

**Figure 1** shows a schematic representation of an SOFC system in accordance with an embodiment of the invention. The dotted arrows represent a transfer (receipt or loss) of heat.. The dashed line represents the gaseous fuel. The dotted-dashed line corresponds to air. The dashed line with two dots corresponds to water. The light full line corresponds to the stream on the anode side, which stream comprises one or more of the gaseous fuel, hydrogen, carbon monoxide, carbon dioxide, water vapor, nitrogen and oxygen, depending on the position in the system (before or after the reformer, anode and/or burner).
**Figure 2** shows a more detailed schematic representation of an embodiment of the SOFC system shown in Figure 1.
**Figure 3** shows a turbine-fan assembly.
**Figure 4** shows two successive turbine-fan assemblies.
**Figure 5** shows a schematic representation of an SOFC system in accordance with a second embodiment of the invention.
**Figure 6** shows a schematic representation of an SOFC system in accordance with a third embodiment of the invention. This SOFC system uses a turbine-fan assembly as illustrated in Fig. 3.
**Figure 7** shows a schematic representation of an SOFC system in accordance with a fourth embodiment of the invention.

### Detailed Description of the Preferred Embodiments

Figure 1 shows an SOFC system 1 according to an embodiment, which comprises an SOFC 100 comprising an SOFC stack comprising anode 110 and cathode 120.

The system of the invention preferably comprises a fuel inlet 10 arranged to supply fuel to a fuel inlet of the anode 110. Gaseous fuel, in particular a gaseous hydrocarbon, such as methane, ethane, propane, butane and possibly mixtures thereof, is transported from a fuel source via the fuel inlet 10 to the reformer 400. The fuel source is not shown and may be an external gas distribution system.

In Fig. 1, a fuel inlet fan 12 is arranged with respect to the fuel inlet 10 so as to produce a gaseous fuel stream transporting the fuel to the reformer 400. In Fig. 1, the fan 12 operates in a pumping mode, and thus brings about the transport of the fuel by pumping the fuel in the direction towards the reformer and the anode 110.

In the art, the terms "fan", "blower" and/or "compressor" are sometimes distinguished on the basis of the pressure ratio associated with the device, in particular the ratio between the outlet pressure and the inlet pressure. Typically, fans have the lowest pressure ratios and compressors the highest. According to a definition, fans have a pressure ratio of 1.1 or lower, blowers have a pressure ratio from 1.1 to 1.2, and compressors have a pressure ratio of higher than 1.2.

In a preferred embodiment, the present invention is not limited with respect to the pressure ratio of the fans, blowers and/or compressors disclosed in this specification. Therefore, reference to a "fan" is intended to encompass reference to a blower and/or a compressor. In this specification, the term "fan" is generally used to encompass, independently, any one of a "fan", "blower", and/or "compressor".

In another embodiment, the fans disclosed in this specification have a pressure ratio of 1.2 or lower, preferably 1.1 or lower. Accordingly, said fans are preferably selected from "fans" and "blowers" according to the above definition, more preferably from "fans" based on the definition above.

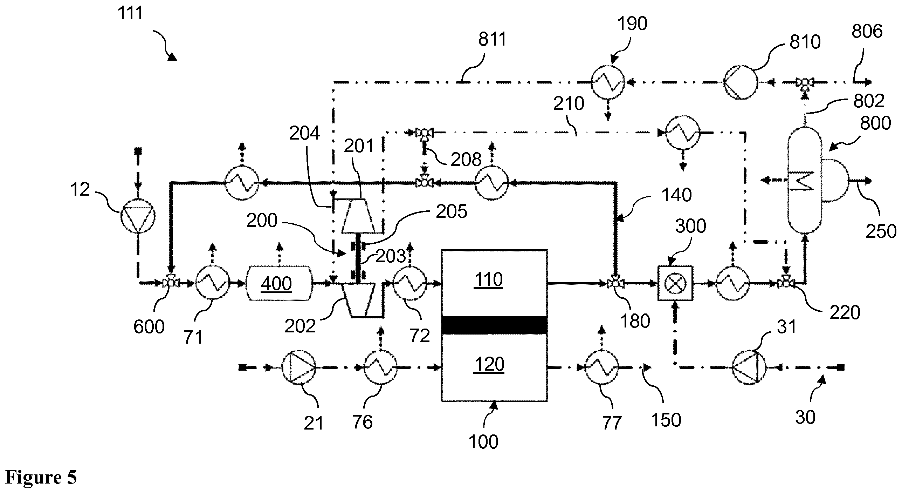

While the system shown in Fig. 1 indicates the presence of a fuel inlet fan 12, the latter is actually not mandatory and may be omitted, for example if the fuel provided at inlet 10 is already sufficiently pressurized. Furthermore, in another embodiment, a fan operating in the suction mode may be placed up-or downstream reformer 400 (Fig. 5). In this case, the fan 12 may be absent.

The present description discloses fans (blowers and/or compressors) for bringing about the transport and thus the streams of gases in the circuits and ducts of the SOFC system. These fans may operate, independently, in a pumping or aspirating mode. This freedom provides the skilled person with numerous possibilities of varying the positioning of any fan in the circuit of the system. Some possible variation of positioning fans will be discussed herein after with respect to the preferred embodiments shown in the figures. The invention is, however, not limited to the embodiments shown.

The system as shown in Figure 1 comprises several heat exchange elements 71-79. Each of said heat exchange elements as shown in Fig. 1 represents at least one instance where heat is exchanged with another heat exchange element. In other words, each heat exchange element requires at least one additional heat exchange element so as to function as a heat exchanger.

For the purpose of the present specification, a "heat exchange element" is therefore part of a heat exchanger.

Fig. 1 does not show the specific combination of heat exchange elements that results in a particular net heat exchange. Furthermore, a heat exchange element as shown in Fig. 1 represents a net heat exchange but may actually be split or distributed in a plurality of heat exchangers, which, together, result in a net heat exchange represented by the appropriate symbol (nos 71-79) in Fig. 1.

Said plurality of heat exchange elements may be successive heat change elements, in particular connected in series. Connection in parallel of heat exchange elements is also possible.

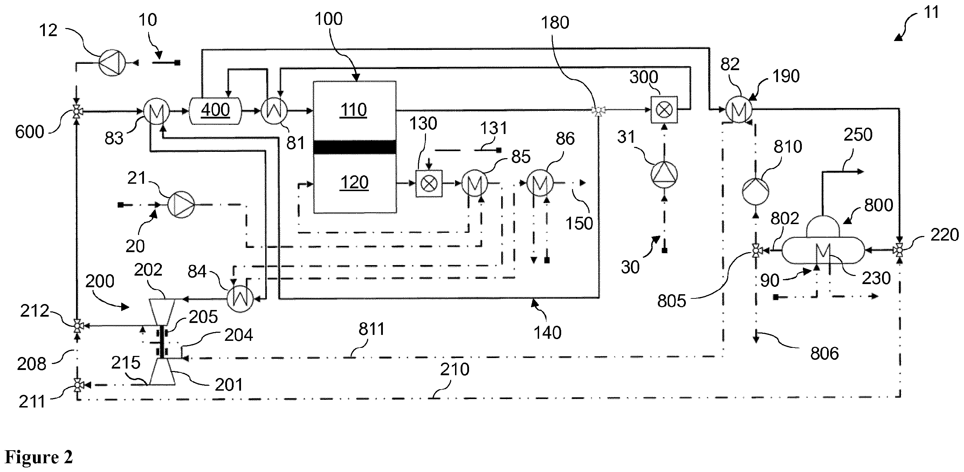

A particular, exemplary arrangement of such heat exchange elements and resulting heat exchangers is shown in Figure 2 and will be discussed in more detail herein below with reference to Figure 2. With respect to Figure 1, these heat exchange elements will be referred to as the first, second, third, and up to ninth heat exchange element for the purpose of description. It is noted that the numbering of the heat exchange elements (or heat exchangers) is not intended to indicate any particular order or importance. For example, one may envisage the system with the invention with less or more heat exchange elements, and with differently disposed heat exchange elements, for example. Generally, a heat exchange element could be added to every stream, for example between the anode 110 and the splitter 180, although it is not specifically shown in Fig. 1. It is also possible that a heat exchanger as shown in Fig. 1 is not active in a certain specific heat exchanger network, i.e. no heat is exchanged.

A fist heat exchange element 71 is provided so as to heat the gaseous fuel before the latter reaches the reformer 400. In the reformer, a gaseous fuel and steam are reformed into a hydrogen rich gas. In a next step of the embodiment shown in Figure 1, the temperature of the hydrogen rich gas is increased in the second heat exchange element 72, for example to reach the ideal temperature for the operation of the SOFC. Exemplary temperatures for operating the SOFC are provided elsewhere in this specification.

During operation of the system, the hydrogen rich gas is supplied to the anode 110, where said hydrogen rich gas and oxygen from a cathode air stream electrochemically react to generate electricity, heat and an anode off-gas comprising steam. The steam generated in the anode is de-ionized steam. The steam in the anode off-gas is created when hydrogen gas and oxygen ions from the air react to generate said electricity.

The system of the invention preferably comprises an anode off-gas recirculation assembly, circuit or duct 140. The method of the invention preferably comprises separating an anode off-gas comprising steam resulting from said electrochemical reaction into at least first and second portions.

In an embodiment, the system comprises a first splitter, branch or valve 180 provided downstream said anode, said first splitter 180 being arranged for separating first and second portions of an anode off-gas emitted form an anode outlet. Said first splitter is preferably provided upstream an anode off-gas burner 300. The recirculation assembly 140 preferably branches from said first splitter 180 and is thus arranged for receiving said second portion of anode off-gas.

As can be seen in Fig. 1, the system 1 comprises a splitter, branch, or valve 180, which is suitable to separate the anode off-gas into a first and a second portions of anode off-gas, downstream the anode 110.

The second portion of the anode off-gas is guided through the anode off-gas recirculation assembly 140. The purpose of the anode off-gas recirculation assembly is to introduce part of the anode off-gas to the gaseous fuel up-stream the anode, in particular at mixer or junction 600, so as to provide the steam that is necessary for operating the reformer 400. As described in WO2016/087389, water is required in the Steam Reforming Reaction and in the Water Gas Shift Reaction, which result in the formation of the hydrogen rich gas from the fuel and water. The reformer 400 is arranged for reforming said fuel before it enters said anode 110 of said SOFC 100. An additional effect of anode off-gas recirculation is that non-oxidized hydrogen is recirculated to the anode inlet, and thus the fuel utilization and overall efficiency is increased.

The second portion of the anode off-gas may also be referred to as the recirculating anode off-gas, and the first portion of the anode off-gas may also be referred to as the non-recirculating or, in the embodiment shown, the anode off-gas destined to be burned in burner 300.

A third heat exchange element 73 is provided downstream the branch 180 and arranged so as to remove heat and thereby cool down the second portion of the anode off-gas.

The system of the invention preferably comprises a turbine-fan assembly 200, comprising a steam-driven rotatable turbine 201 and a rotatable fan 202, coaxially connected to said turbine 201, wherein said fan 202 is arranged so as to bring about the transport of said second portion of anode off-gas. In particular, the fan 202 brings about the transport of said second portion of anode off-gas towards a second valve or mixer 600, where said second portion of anode off-gas is mixed with fuel.

The method of the invention preferably comprises transporting said second portion of anode off-gas with said fan 202 and mixing or merging said second portion of anode off-gas with said gaseous fuel, thereby providing said steam for reforming the gaseous fuel.

The anode off-gas recirculation stream is driven by the fan 202 of the turbine-fan assembly 200. Assembly 200 comprises a turbine 201, which is coaxially connected via shaft 203 to the fan 202. The rotation of turbine is propelled as will be described further below.

The fan 202 of the turbine-fan assembly 200 may be configured and/or arranged on the SOFC system in any suitable way so as to transport the second portion of the anode off-gas through the recirculation path or circuit 140. In principle, the fan 202 may be arranged so as to operate in a pumping mode or in a sucking mode.

In an embodiment (shown in Figs 1 and 2), said fan 202 of said turbine-fan assembly 200 is arranged with said anode off-gas recirculation assembly 140 so as to pump said second portion of anode off-gas towards said second valve or mixer 600. In this case, the fan 202 operates in a pumping mode.

In another embodiment, described in more detail with respect to the embodiment shown in Fig 5, said fan 202 of said turbine-fan assembly 200 is arranged to operate in a sucking mode, so as to suck said second portion of anode off-gas towards said second valve or mixer 600. Turing back to the embodiment shown in Figure 1, after leaving the fan 202 due to the rotation of the latter, the second portion of the anode off-gas is mixed with the gaseous fuel at junction 600, thereby completing the anode off-gas recirculation. Thanks to mixing the anode off-gas with the gaseous fuel, steam is added to the fuel, thereby supplying constituents required for the Steam Reforming Reaction in the reformer 400, upstream junction 600, and thus for the creation of hydrogen rich gas.

In an embodiment, the system of the invention comprises a burner 300 arranged for receiving and burning said first portion of anode off-gas, thereby producing off-gas.

Downstream the separator 180, the first portion of the anode off-gas stream is transported to the burner 300. In the burner 300, the anode off-gas is combusted in presence of air. For example, carbon monoxide and unused fuel and/or hydrogen gas is combusted, thereby generating heat. In this specification, the anode off-gas after exiting the burner may be referred to more specifically as the burner off-gas. It is understood that the burner off-gas is also considered as an anode off-gas, since it refers in a first instance to the off-gas resulting from the processes at the anode.

As will be described further below, the system preferably comprises a first an air inlet 20 arranged to supply air to the cathode 120.

In an embodiment, the system comprises a second air inlet 30, arranged for supplying air to the burner 300 for providing oxygen for burning said anode off-gas. The air may be taken from the environment or from a separate source, for example.

In the embodiment shown, and in contrast to many traditional SOFC systems, such as WO2013/154353, the air for providing the oxygen necessary for the combustion in burner 300 is not provided by the cathode off-gas. Indeed, in the embodiment shown, the cathode off-gas stream remains separate from the anode off-gas stream and the two streams do not join. In contrast, a burner air inlet 30 is provided. A second air fan 31 is arranged with respect to the second air inlet 30 so as to provide fresh air to the burner. In Figs 1 and 2, this is done by pumping the air to the burner. WO2016/087389 discloses various advantages for providing a fresh air supply for the burner. First, the cathode off-gas is oxygen depleted, which means that when using fresh air, less air is required for providing a given amount of oxygen. Consequently, the air flow through the burner can be diminished and the efficacy of the combustion improved. Furthermore, given that less air is used for the combustion, the off-gas leaving the burner has a higher partial pressure of steam, which improves the heat recuperation in the condenser, as described herein after. Further advantages are mentioned in WO2016/087389.

In an embodiment, a single air fan is used instead of two separate fans 21, 31, for providing fresh air to both, the cathode and the burner 300. In this case, a slit, branch or valve may be required for separating air delivered to the cathode from air delivered to the burner.

"Fresh air" refers to the fact that the air is not cathode off gas, but that the air may be taken from the environment or any suitable source. Furthermore, for the purpose of the present specification air is used as a source of oxygen for operating the SOFC and/or for supplying air to the burner 300. The invention encompasses that any gas comprising oxygen in sufficient amounts so as to enable the operation of the SOFC may be used. The invention does not exclude the use of pure oxygen gas, for example.

In other embodiments, not illustrated in the figures but encompassed by the invention, the invention provides using the cathode off-gas for supplying air to the burner of the SOFC system as illustrated, for example, in WO2013/154353. While this embodiment is currently less preferred, it is not excluded by the present invention.

The burner off-gas still contains steam originating from the generation of H₂O in the anode of the SOFC and due to the steam supplied to the reformer 400 by the anode off-gas recirculation assembly 140. Additionally, steam is produced by the combustion of hydrogen with air in the burner.

The method of the invention preferably comprises condensing steam contained in said first portion of said anode off-gas, and separating anode-off-gas from water obtained by said condensation. In an embodiment, the system of the invention comprises a condenser 800, arranged for condensing water contained in said first portion of anode off-gas, a conduct 802 for feeding said condensed water to an evaporator assembly 190, and a conduct 811 for feeding said steam to said turbine 201 for driving said turbine 201 and thereby driving said turbine-fan assembly 200.

The system 1 preferably comprises a condenser 800 provided downstream the anode 110 and preferably downstream the burner 300. The condenser is supplied with the burner off-gas and is configured to condense water and thereby produce liquid water and separate off-gas such as CO2 and non-condensed steam from said liquid water, which off-gas is discharged from the the system through outlet 250. It is noted that the heat-reduction related to condensing H₂O is preferably utilized for any beneficial purpose, for example for heating a fluid as described elsewhere in this specification.

Liquid water is discharged from the condenser 800 through duct 802, which leads to a splitter 805, arranged to remove water which is no longer required through outlet 806.

It is noted at this stage that the water discharged from the condenser 800 is deionized water, which is thus potentially useful as a source of steam for the reformer 400.

In an embodiment, the system of the invention comprises an evaporator assembly 190 arranged for producing steam from water. Preferably, the method of the invention comprises evaporating said water so as to obtain steam.

From the splitter 805, liquid water that is not removed is pumped by pump 810 to an evaporator assembly, configured to transform the condensed water into steam. In an embodiment, the evaporator assembly 190 preferably comprises several parts, such as a preheater, an evaporator and a superheater. The evaporator assembly 190 produces steam that will be used as described herein below. It is noted that the evaporator comprises at the same time a heat exchange element 75 and is preferably arranged so as to receive heat from the system, preferably heat from anode off-gas, as will be described with reference to Fig. 2.

In a preferred embodiment, the system of the invention comprises a water recirculation assembly, circuit or duct 210 arranged downstream the turbine 201 for conducting steam to the condenser 800 thereby rendering water in said steam available for said evaporator assembly.

In steam duct 811 the steam produced in the evaporator assembly is transported towards the turbine 201 of the turbine-fan assembly 200, which uses the steam to propel the rotation of the turbine and thus of the entire turbine-fan assembly 200. Accordingly, the method of the invention comprises driving the turbine 201 with the steam produced by the evaporator. Thereby, the anode-off gas recirculation loop 140 is driven by said steam via said turbine-fan assembly 200.

In an embodiment, the steam produced in the evaporator assembly is not only used for driving the turbine 201, but also for lubricating the bearings 205 of the said turbine-fan assembly 200. The steam-lubrication of the bearing 205 and the advantages of using such bearings in the context of the present invention will be described further below.

In an embodiment, the system comprises a water recirculation assembly, circuit and/or duct 210 comprising at least one duct for joining the steam and the anode off-gas or burner off-gas at a position 220 downstream said turbine 201 and upstream said condenser 800, thereby increasing the steam content in said anode off-gas or burner off-gas.

As visible in Fig. 1, the steam, after having driven the turbine 201, is transported via a steam return duct 210 to the mixer or junction 220, where the steam is injected into the first portion of the anode-off gas, more specifically into the burner off-gas. At junction 220, the injection of steam increases the partial pressure of steam compared to other gaseous components, which favours water recuperation in the condenser 800 and also improves heat recovery at the condenser. It is noted that the steam recovery at junction 220 combines in an advantageous and synergistic manner with the use of fresh air from inlet 30 for operating burner 300, further increasing partial pressure of H₂O.

In the embodiment shown in the Figures, the water recirculation assembly 210 is shown to join the anode off-gas or burner off-gas upstream said condenser 800. In an alternative embodiment, not shown in the figures, the present invention encompasses a SOFC system comprising a separate condenser for condensing specifically and/or separately liquid water from the steam that was used to drive the turbine 201. The water condensed in such a separate, additional condenser may then be removed through an outlet, for example similar to outlet 806, or may be connected separately to pump 810 and/or evaporator assembly 190, for reutilization.

It has been specified above that the rotation of the turbine 201 entails rotation of the fan 202 by way of shaft 203, which connects said turbine and fan preferably in a coaxial manner. In an embodiment, said rotatable shaft 203 is arranged to be gas-lubricated during the operation of the system 1. Preferably, the shaft 203 is levitated by way of said steam produced by the evaporator assembly 190 and used to drive said turbine 201. In an embodiment, said turbine-fan assembly 200 comprises a rotatable shaft 203 for coupling the turbine 201 and the fan 202, and a gas-lubricated bearing 205.

In an embodiment, the turbine-fan assembly comprises a gas-lubricated bearing, preferably a steam-lubricated bearing.

The gas-lubricated bearing may be selected from different types, such as herringbone-grooved journal bearing (HGJB), spiral-grooved thrust bearing (SGTB), foil journal bearings, slider bearings, and foil thrust bearing, for example. Preferably, the gas-lubricated bearing is a HGJB or a SGTB.

Providing a gas- and, more preferably, a steam lubricated bearing for the turbine-fan assembly 200 provides a number of advantages to the system of the present invention. First, the steam used to propel the turbine 201 is readily available and can be used. Furthermore, such bearings are advantageous in that they require little maintenance, compared to bearings typically used in such a system, such as ball bearings and oil-lubricated bearings. A disadvantage of oil-lubricated bearings is that some oil of the bearing will typically get into the anode off-gas through the recirculation assembly 140, and from there to the anode, where it pollutes the anode and reduces service life of the anode and reformer 400.

Ball bearings are also disadvantageous, due to the requirement of being frequently serviced, comparatively low maximum revolution speed and lack of supporting elevated temperatures. For example, gas-lubricated bearings support typically higher revolution speeds. In an embodiment, the gas lubricated bearing of the turbine-fan assembly 200 is operational with revolution speeds above of higher than 500 rounds per second, preferably more than 1000 rounds per second, more preferably more than 2000 rounds per second, and most preferably more than 2500 rounds per second, for example 2500-3500 rounds per second.

By accommodating such high revolution speeds, the entire system of the invention can be scaled down and becomes available for smaller scale applications. For example, the system of the present invention may be used providing electric power and heat to a one-family dwelling, an apartment dwelling and/or a multi-apartment dwelling, or any other heated building or facility. It is noted that a comparatively smaller SOFC system size in terms of electricity output implies smaller mass flows to recirculate and thus smaller compressor diameters for optimal efficiency, which in turn implies higher rotational speeds in order to achieve the same pressure increase.

In an embodiment, the provides for and/or involves a leakage of steam 204 produced by said evaporator assembly 190 into the second portion of said anode off-gas. In an embodiment said leakage is provided by and/or in said turbine-fan assembly, preferably through said steam-lubricated bearing.

In Figure 1, the steam reference numeral 204 thus preferably does not represent a particular duct, through which steam passes into the anode recirculation stream, but preferably represents leakage into the recirculated anode off-gas through the steam-lubricated bearing 205. Preferably, the steam is present at higher pressure than the second portion of anode off-gas in the anode off-gas recirculation assembly 140 and in particular in the fan 202, such that anode off-gas is prevented from entering the steam recirculation duct 210. In this manner, some steam gets automatically via the gas-lubricated bearing and thus through the inside of the housing of the turbine-fan assembly 200 into the recirculating anode off-gas during operation of the device. In general, it is observed that the smaller the steam leakage from the turbine 201 to the recirculating anode off-gas, the higher the SOFC system efficiency.

The steam leakage, which may also be referred to as "bleeding" is a side effect of the steam lubrication of bearings 203 of the turbine-fan assembly 200. As such, the steam leakage is not necessarily wanted. On the other hand, the leakage of a relatively small amount of steam does not negatively affect the efficiency and/or the life-time of the system of the invention. The advantage of using steam lubricated bearings by far outweighs the leakage of a small amount of steam across the turbine-fan assembly 200.

In an embodiment, a steam transfer to the second portion of anode off-gas is provided by a separate steam supply duct 208 arranged for feeding steam produced in said evaporator assembly 190 into said anode off-gas recirculation assembly 140 and/or for adding steam produced in said evaporator assembly 190 to the fuel provided from said fuel inlet 10.

As shown in Figure 1, a steam transfer duct or steam supply duct 208 is provided, for transporting steam produced by the evaporator assembly 190 into the recirculated anode off-gas. In the embodiment shown, a junction or splitter 211 is provided downstream the turbine 201, for example in the steam return duct 210. From the valve, the steam supply duct 208 leads to a steam injection junction, splitter or mixer 212, where steam is mixed with the second portion of the anode off-gas.

As described, the steam supply duct 208 is optional. If present, it may be used to increase and/or control the steam content that is eventually supplied to the reformer 400, for example via the anode off-gas recirculation assembly 140. The steam supply duct 208 may be provided inside the turbine-fan assembly 200, for example in the housing of the latter, for allowing steam transfer inside the turbine-fan assembly 200. Alternatively, junction or splitter 211 may be provided upstream the turbine 201, instead of downstream as shown. Another modification naturally encompassed by the invention would be to provide steam injection junction 212 downstream the anode off-gas mixer or injector 600, for example immediately upstream of reformer 400. In summary, supply of steam stemming from evaporator assembly 190 to the reformer 400 is optional and the invention is not limited with respect to the particular manner in which such steam supply, if present, is realized. In a preferred embodiment, such steam is added to the recirculated anode off-gas.

Figure 1 shows an optional heat exchange element 78, upstream the mixer 600. The heat exchange element 78 may be used in addition to the heat exchange elements shown. In another embodiment, the heat exchange element 78 replaces heat exchange element 71, such that heat exchange element 78 receives heat from heat exchange element 73 thereby forming the heat exchanger 83 in Fig. 2. Furthermore, an optional heat exchange element 79 is shown on the steam return duct 210. In the system as shown, the heat exchange element 79 and also heat exchange element 78 are not active, which means they do not exchange heat and are not part of a heat exchanger.

For clarification it is mentioned that the particular presence and arrangement of heat exchange elements and heat exchangers as shown in the figures represents a particular, preferred embodiment. The skilled person may easily adapt and/or modify the system, for example adding and removing one or more heat exchangers, and/or connecting heat exchange elements differently such that heat flow is not exactly conducted as shown in the particular embodiment shown.

In summary, in the system of the invention, water contained in a first portion of anode off-gas is preferably used as a source of steam, which steam is used to drive an anode-off gas recirculation, in which a second portion of anode-off-gas is mixed with gaseous fuel and added as a source of gaseous water to the reformer. The anode off-gas recirculation is preferably driven by way of a turbine-fan assembly. The steam for driving the turbine-fan assembly is preferably produced by condensing water contained in the first portion of anode off-gas and evaporating said water using an evaporator. Preferably, heat produced in the system, for example contained in anode off-gas and/or burner off-gas (or more generally, heat produced by the anode off-gas burner), is used to transfer heat to water and evaporate said condensed water. This heat is preferably also used to heat the reformer and the fuel before it is supplied to the anode.

In an embodiment, the SOFC system of the invention is configured such that:
(a) water for producing steam in said evaporator assembly 190 is produced entirely in said anode 110 and/or or contained on said anode off-gas;
(b) said system lacks an external supply of deionized water for operating a reformer 400; and/or
(c) said system lacks an external supply of water for driving said turbine 201.

Preferably, points (a)-(c) apply to the situation where the system is continuously operating, during a continuous operating mode, in particular after a start-up phase. In an embodiment, the system provides for enabling the system to achieve the situation as depicted in point (a)-(c), which situation may also be seen as the equilibrium situation. For example, steam produced from deionized water from an external source or from an internally provided tank (not shown) may be used to drive the turbine-fan assembly 200 before sufficient steam has been generated by the anode. Such a tank may be filled up again with water created in the anode once the system runs for a certain time.

Furthermore, additional heaters and/or burners may be provided in order to heat one or more selected from the fuel, the air, the reformer, and/or the SOFC to the required temperature before the operation temperature is maintained by the system itself during operation.

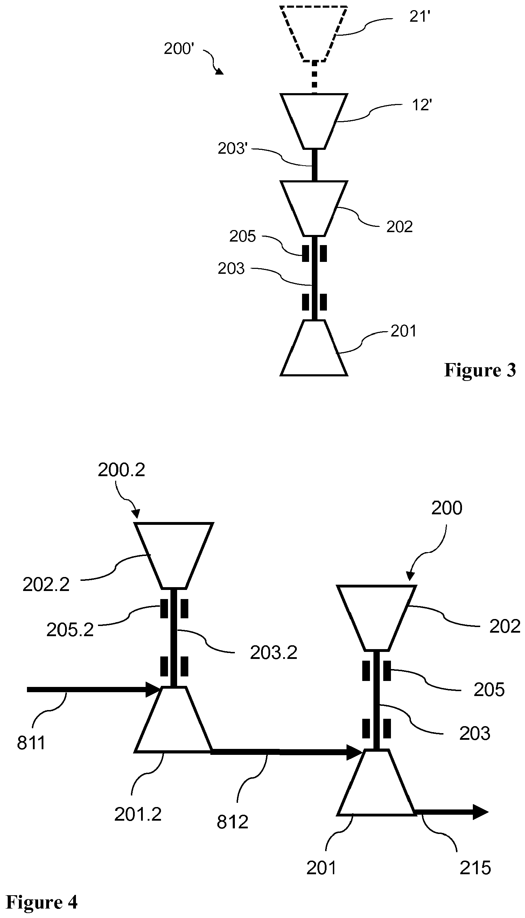

Figures 1 and 2 show an embodiment, in which the anode-off gas recirculation is driven by the turbine-fan assembly 200. The invention encompasses that further fans (blowers and/or compressors) be connected to and driven by the turbine 201. In an embodiment, such further fans are preferably also arranged coaxially with the turbine fan assembly 200, preferably in prolongation of the axle 203 of the assembly. In accordance with this embodiment, the fan 12 for blowing gaseous fuel to the reformer is also driven by the assembly 200, and preferably said fan 12 is coaxial with said turbine 201 and said fan 202. The invention also encompasses that one or both of air fans 21 and/or 31 are driven by the turbine-fan assembly 200 and may be coaxially arranged with the latter. This latter and other embodiments will be described with respect to Figures 3 and 4.

Turning to the cathode 120 side of the SOFC 100, the system 1 comprises an air inlet 20. An air fan or first air fan 21 is arranged with respect to the cathode circuit so as to bring about the stream of the cathode gases in the cathode circuit. In the embodiment shown in Fig. 1, the first air fan 21 pumps air from the air inlet towards the cathode 120. A heat exchange element 76 is provided, where the air is heated to the appropriate temperature before entering the cathode. At the off-gas outlet of the cathode, the cathode off-gas is guided through at least one further heat exchange element 77, so as to utilize the heat of the cathode off-gas, for example for heating the air before it enters the cathode.

In an embodiment, anode and cathode circuits of the system are separate. Preferably, the system of the invention lacks a duct, junction or mixer for merging anode off-gas and cathode off-gas and/or which lacks a burner receiving cathode off-gas.

As can be seen in Fig. 1, a particularity of system 1 is that the cathode off-gas is not mixed with the anode off-gas or otherwise used as a source of air for the burner. Indeed, the burner 300 receives fresh air via a separate or dedicated air inlet and preferably a second air fan 31. In accordance with the embodiment shown, the cathode off-gas may be discharged at cathode off-gas outlet 150, preferably after at least some heat of the cathode off-gas has been recovered.

**Figure 2** shows a system 11 according to a particular embodiment of the system 1 shown in Figure 1, and the same reference numerals are used for the same structural parts, except where otherwise indicated. In particular, Figure 2 shows an embodiment of a manner of arranging heat exchange elements for achieving heat exchange in the system and also provides an example of using heat for other, external purposes.

When looking at the first portion of anode off-gas at the outlet of burner 300, one can note that what is indicated to be heat exchange element 74 in Figure 1 is split in several heat exchange elements connected in series. In particular the burner off-gas is used in a first heat exchanger 81 to heat the hydrogen rich gas upstream the anode inlet. Accordingly, heat exchange element 74 transfers heat to heat exchange element 72 as shown in Fig. 1, forming the first heat exchanger 81.

In a preferred embodiment, the burner off-gas is used to heat the reformer 400, such that heat exchange element 74 as shown in Fig. 1 transfers heat to reformer 400. The reformer thus also functions as or comprises a heat exchange element and is part of a heat exchanger. This is illustrated in Fig. 2 by way of the anode off-gas outlet of the first heat exchanger 81 pointing towards the reformer 400.

Of course, the invention encompasses that the burner may be used directly to transfer heat to the reformer, by disposing the burner in spacial vicinity with the reformer 400, as is shown in the figures of WO2016/087389 and WO2013/154353, for example.

In Fig. 2, the first portion of anode off-gas, after having transferred heat to the reformer 400, is used in a second heat exchanger 82. Second heat exchanger 82 comprises the heat exchange element 75 in the evaporator assembly 190 (Fig. 1). Accordingly, heat remaining in the first portion of the anode off-gas (more specifically: the burner off-gas) is used to evaporate water that has previously condensed in condenser 800.

As discussed above with respect to Fig. 1, the anode off-gas (more precisely: the burner off-gas) has been transferred to the condenser 800 for condensing water, and the remaining anode-off gas is discharged at anode off-gas outlet 250. As better seen in Fig. 2, the condenser 800 cooperates with a heat recovery assembly or cooling assembly 90. The assembly 90 provides a cooling fluid, for example water, such as tap water, for accomplishing the condensation of the water in the anode off-gas.

Advantageously, the cooling assembly 90 may be used to recover heat remaining in the burner off-gas when the latter enters condenser 800. For example, the condenser may be used to heat a fluid, for example for the purpose of providing heating of a building or for providing hot tap water.

In an embodiment, the SOFC system comprises a heater 230 arranged with said condenser 800 for heating a fluid from an external source, preferably a liquid fluid, such as tap water. As mentioned elsewhere in this specification, the system of the invention may be used in buildings or facilities, such as house or apartment dwellings, for generating electricity. By recovering the heat at condenser 800, for example, the system of the invention may be used in addition to contribute to heating of the buildings and facilities, and/or producing hot tap water, for example.

Instead of using tap water, one may envisage using air for use in air conditioning as the cooling fluid. In this case, said heater 230 may be an air heater. Accordingly, air may be heated and used to heat said building or other heated space (e.g. in a heated vehicle).

The heat contained in the (recirculating) second portion of anode off-gas, split off at valve 180, is transported to a third heat exchanger 83, where it is used to heat the gaseous fuel before the latter enters the reformer 400. The third heat exchanger 83 in Fig. 2 accomplishes a heat exchange between the heat exchange elements 71 and 73 as shown in Fig. 1.

Downstream the third heat exchanger 83, the anode off-gas is transported to a fourth heat exchanger 84, where it transfers heat to cathode off-gas, thereby heating the latter slightly, as discussed with respect to the cathode off-gas hereinafter.

Turning now to the cathode gas stream, the air entering the first air inlet is heated in a fifth heat exchanger 85 using cathode off-gas. In Fig. 1, heat exchange elements 76 and 77 are thus used to heat the air before it enters the cathode while using heat from the cathode off-gas.

Fig. 2 illustrates that heat exchange element 77 as shown in Fig. 1 is used in three successive heat exchangers 85, 84 and 86. In the particular embodiment shown, cathode off-gas, after having transferred heat to the air supplied from the air inlet 20, takes up heat at the fourth heat exchanger 84 mentioned above, thereby cooling the recirculating anode off-gas before it enters the fan 202. This is advantageous as is allows lowering the heat exposure of the turbine-fan assembly 200 and of the fan 202. As the impeller 202 compresses the second portion of the anode off-gas at lower temperatures, its power consumption is lower. Consequently, the required mass flow of steam to the turbine 201 and the heat supplied by the evaporator assembly 190 are lower. In this specific SOFC system 11 the pinch point is found in the evaporator assembly 190, i.e. the closest approach temperature of a cold and hot fluid within a heat exchanger.

In a sixth heat exchanger 86, heat in the cathode off-gas after fourth and fifth heat exchangers 85 and 84 is transferred to a cooling fluid, such as water. At this stage, the heat may be used for recovering heat, for example for heating a heating medium for the purpose of heating a building or any other construction to be heated, and/or for heating tap water or air for air conditioning, as has been described above with respect to heat recovery assembly 90.

**Figure 3** shows a turbine-fan assembly 200'. The assembly 200' is as the turbine-fan assembly 200 described with respect to Fig. 1, comprising a shaft 203 connecting a turbine 201 and a fan (blower or compressor) in a coaxial manner. Preferably, the shaft is born with a gas-lubricated bearing 205, and preferably a steam lubricated bearing. As can be seen in Fig. 3, the shaft comprises a prolongation or extension 203', which connects coaxially to a second fan 12'. In an embodiment, the second fan is 12' may be used as a fuel fan 12 as shown in Fig. 1 and thus replaces that fan 12. However, the fan 12' may be used for other purposes.

It is possible to provide the system shown in Fig. 3 in such a manner that the pressure ratios of the first and second (and further) fans are not exactly the same, such that, for example, the two fans may be selected independently from "fans", "blowers" and "compressors according to the definitions based on pressure ratios given elsewhere in this specification. Accordingly, the turbine-fan assembly as shown in Fig. 3 may comprise a "fan" *and* a "blower", for example.

In addition, according to a yet further embodiment, shown as dotted line in Fig. 3, the shaft 203 and 203' may optionally be further extended so as to coaxially connect a third fan 21' to the same turbine-fan assembly 200'. In an embodiment, the third fan may be an air inlet fan and may replace the air inlet fan 21 as shown in Figs 1 and 2.

For the purpose of clarification, it is noted that any one of fan 12' and or 21' (in case fan 21' is present) as shown in Fig. 3, may independently be used as fuel inlet fan 12 as shown in Figs 1 and 2, an air inlet fan 21 as shown in Figs 1 and 2, or as any other fan, including the air fan 31 or another fan not shown in the system of Figs 1 and 2.

The turbine-fan assembly 200' may comprise two, three or even more fans 202, 12', 21' connected coaxially with said turbine 201. It is noted that shaft 203 may also be extended on the side of the turbine 201 so that one or both of said second or third fan 12', 21' are connected one the side of the turbine (not shown). For example, a second fan 12' may be connected as extension beyond fan 202 and a third fan 21' may be connected as an extension of the turbine 201. Such a disposition may assist in equilibrating the entire turbine-fan assembly 200' and may thus increase stability and facilitate the bearing. Preferably, the turbine-fan assembly 200' according to this embodiment also comprises gas-lubricated bearings.

In a preferred embodiment, the turbine-fan assembly 200' is for use in an SOFC system, for example as shown in figures 1 and 2, but may also be used in another system.

**Figure 4** shows two turbine-fan assemblies 200 and 200.2 present in the system. In Fig. 4, the two assemblies 200, 200.2 are connected in series. The turbine-fan assembly 200 is substantially identical to the turbine-fan assembly 200 described herein above with respect to Figs 1 and 2, and same reference numerals in Fig. 4 indicate the same structural entities as in Figs 1 and 2.

In Fig. 4, the second turbine-fan assembly 200.2 is provided up-stream the first turbine-fan assembly 200.

Accordingly, steam is provided via steam duct 811 from the evaporator assembly 190 as shown in Fig. 1, for example. The steam is used to drive the second turbine 201.2 of the second turbine-fan assembly 200.2. Via a shaft 203.2, the rotation of the second turbine 201.2 entails rotation of the second fan 202.2, which is coaxially connected via said shaft to the second turbine 201.2. It is noted that the second turbine-fan assembly 200.2 preferably also comprises steam lubricated bearings 205.2, as described herein above with respect to the first turbine-fan assembly 200.

After exiting turbine 201.2, the steam is used to drive the first turbine-fan assembly 200. Accordingly, the steam is guided with a duct 812 to the turbine 201 of the first turbine-fan assembly. After having been used to drive the first turbine 201, the steam exits the first turbine-fan assembly 200 at outlet 215. The steam may enter, for example, steam return duct 210, as indicated in Figs 1-2. Alternatively, as also described above, the steam may be condensed by a separate condenser and/or may be removed as it is.

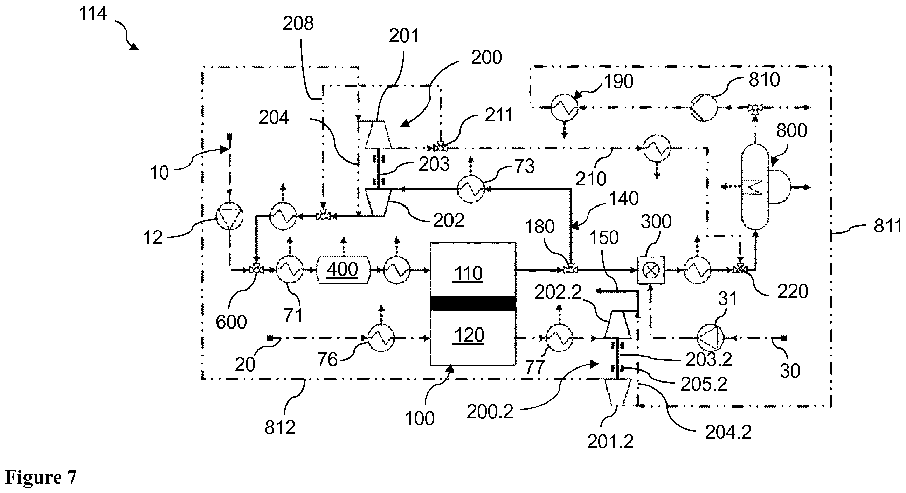

Preferably, the one or more additional turbine-fan assemblies, such as said second turbine-fan assembly 200.2, may be used to drive other and/or additional fans. In an embodiment, the fan 202.2 of the second turbine-fan assembly 200.2 corresponds to the fuel inlet fan 12 as shown in Fig. 1. In another embodiment, the fan 202.2 of the second turbine-fan assembly 200.2 may be used to replace the air inlet fan 21 as shown in Fig. 1. An example of this latter embodiment will be described in more detail with respect to Fig. 7. In yet another embodiment, the fan 202.2 of the second turbine-fan assembly 200.2 replaces the air inlet fan 31 for the burner 300 as shown in Fig. 1.

While Fig. 4 shows the second turbine-fan assembly 200.2 to be upstream the main or first turbine-fan assembly 200, the second turbine-fan assembly 200.2 may as well be arranged downstream and/or after the first turbine-fan assembly 200.

Furthermore, the first and second fans 202 and 202.2 may be arranged independently to operate in the pumping and sucking mode, respectively.

It is noted that for the embodiment shown in Fig. 4 and also the embodiment shown in Fig 7 discussed below, the pressure of the steam in duct 811 could be conveniently increased to an appropriate level by the pump 810, thereby allowing to expand the steam in several turbines and thus allowing to drive a second and possibly even further turbine of a second or even further turbine-fan assembly.

**Figure 5** shows an SOFC system 111 according to a second embodiment of the invention, which differs from the embodiment shown in Fig. 1 in that the fan 202 of the turbine-fan assembly 200 is not positioned on the anode off-gas recirculation circuit 140, but after the reformer 400, that is downstream the reformer and upstream the anode 110. At this position, the fan 202 operates in a sucking or aspiration mode and is arranged so as to cause the transport stream of the second portion of anode off-gas from the splitter 180 and possibly also of the fuel entering the system at the fuel inlet 10. The amounts of anode off-gas and fuel in the mixture entering the reformer can be controlled at mixer or valve 600. From the position after the reformer 400 and before the heat exchange element 72, the reformed fuel is blown through the said heat exchange element 72 and from there through anode 110.

There are a few advantages associated with having the fan 202 of the turbine-fan assembly 200 operating in an aspirating mode as shown in Fig. 5.

An advantage of the system of Fig. 5 is that it is possible to omit the heat exchange element 73, which in Fig. 1 was used to cool down the recirculating portion of the anode off-gas before it reaches the fan 202. In Fig. 1, the reduction of the heat of the recirculating anode off-gas was useful to prevent the fan 202 from being exposed to high temperatures. It is noted that the reactions taking place in the reformer are endotherm, which is why the fuel is heated at heat exchange element 71 and also the reformer receives heat from heat exchange element 74 as has been described above. By placing the fan 202 after the reformer 400, the heat in the recirculating anode off-gas can be directly be used to heat the fuel and it is not necessary to conduct cooling of the recirculating anode off-gas followed by heating the reformer.

It is also noted that the steam 204 due to leakage can be used in the anode. As a downside of the system of Fig. 5 compared to the one in Fig. 1 one may put forward that the fan 202 in Fig. 5 needs to circulate a higher mass flow, thus needs more power, thus the turbine needs more steam and the evaporator 190 needs more heat.
in the former system the pressure of O₂ in the anode is lower and thus the power efficiency of the SOFC slightly lowered.

A further possible advantage of the system 111 is that the fuel inlet fan 12 could be removed if this was desired, since the fan 202 may now also used to cause the transportation of the fuel. However, from an efficiency point of view, it is an advantage to keep the fuel fan 12.

Instead of placing the fan 202 of the turbine fan assembly 200 downstream the reformer and upstream the anode 110, the fan 202 may also be placed upstream the reformer 400 but still downstream mixer 600.

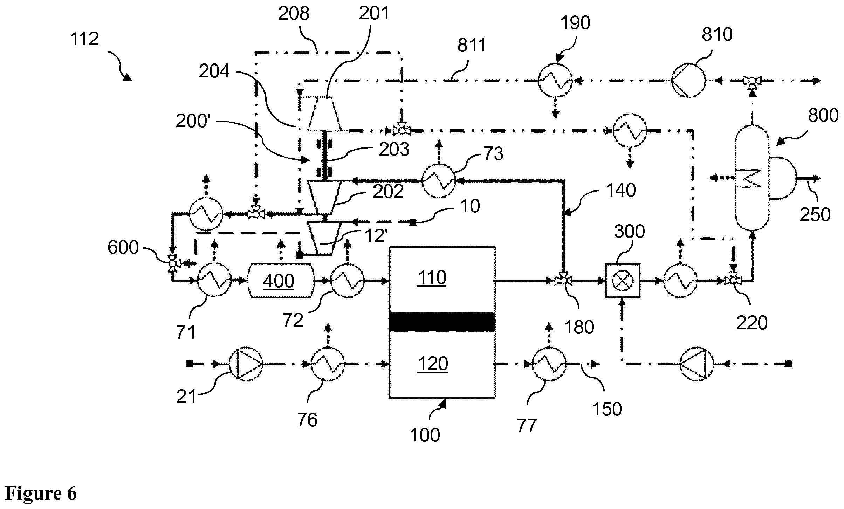

**Figure 6** shows an SOFC system 112 according to a third embodiment of the invention. In brief, a turbine-fan assembly 200' as shown in Fig. 3 (solid line) is used in this embodiment. Accordingly, first and second fans 202 and 12' are coaxially linked via a shaft 203 to the turbine 201, such that the rotation of the turbine entails the rotation of both fans 202 and 12'.

In the embodiment shown, fan 12' replaces the fan at the fuel inlet 10 (reference numeral 12 in Fig 1), and thus causes the stream of fuel in the system, pumping the fuel towards the reformer 400 and the anode 110.

As discussed with respect to Fig. 3, it is at the option of the skilled person to place the second coaxial fan 12' on the side of the first fan 202 (as shown in Figs 3 and 6) or on the side of the turbine 201, with respect to the bearing, which is between the turbine 201 and the first fan 202.

**Figure 7** shows an SOFC system 114 according to a fourth embodiment of the invention. The SOFC system 114 comprises two turbine-fan assemblies 200 and 200.2. In this embodiment, the turbines 201, 201.2 of two turbine-fan assemblies are connected in series, in accordance with the principle shown in Fig. 4. Accordingly, steam is generated in the evaporator assembly 190 as described herein above with respect to the embodiment shown in Figs 1 and 2. The steam is used to propel the second turbine 201.2 of the second turbine-fan assembly 200.2, since the second turbine-fan assembly is arranged up-stream the first turbine fan assembly 200. From the steam outlet of the turbine 201.2 of the second turbine-fan assembly 200.2, the steam is guided via duct 812 to the steam inlet of the first turbine 201 of the first turbine-fan assembly 202, so as to propel the first fan 202.

In the embodiment shown in Fig. 7, the fan 202.2 of the second turbine-fan assembly 200.2 is used to cause the stream of gases on the cathode side. The fan 202.2 in this embodiment operates in the aspiration mode. The fan 202.2 is in particular positioned downstream the cathode 120 and, preferably, downstream the heat exchange element 77, so as to aspirate the cathode off-gas and thereby also aspirate air at the air inlet 20. Accordingly, the air fan 21 at the air inlet 20 shown in Fig. 1 is no longer present in Fig. 7, as it was replaced by the fan 202.2 of the second turbine-fan assembly 200.2 operating in aspirating mode.

The "leakage" or "bleeding" as described herein above may occur at both turbine-fan assemblies 200 and 200.2, and this leakage is indicated in Fig. 7 with reference numerals 204 and 204.2, respectively.

Since the fan 202.2 of the second turbine-fan assembly operates here in the aspiration mode, the steam 204.4 that may leak across the steam-lubricated bearing 205.2 ("leakage") does not have any effect on the cathode efficiency or life time, since the steam does not get into contact with the cathode but is evacuated together with the cathode off-gas at cathode off-gas exit 150.

As a downside of the system of Fig. 7 compared to the one in Fig. 1 one may put forward that in the former system the partial pressure of O₂ in the cathode is lower (due to the aspiration mode) and thus the power efficiency of the SOFC slightly lowered.

From the steam exit of the second turbine 201.2, the steam is guided to the first turbine 201 of the first turbine-fan assembly 200, so as to propel that first turbine 201. The first fan-turbine assembly 200 is used as the turbine-fan assembly shown in Figs 1 and 2 so as to generate the recirculating anode off-gas stream of the recirculation circuit 140.

A plurality of fans is driven by the steam created in one or more evaporator assemblies 190. The fans may be part of separate turbine-fan assemblies as illustrated in Figs 4 and 7, and/or or may be provided coaxially to the turbine-fan assembly 200, as illustrated in Figs 3 and 6. In the case of a plurality of individual turbine-fan assemblies, these assemblies may be connected in series with respect to the steam used to drive the turbines, or the stream of steam may be split so as to drive separate turbine-fan assemblies in parallel.

Furthermore, the skilled person may easily combine the embodiments shown in Figs 4 and 7 on the one hand with those shown in Figs 3 and 6. In an embodiment, the SOFC system comprises a plurality of turbine-fan assemblies 200, 200', 200.2, one or more of which may (but need not) comprise two, three or more coaxial fans 202, 12', 21' per turbine of the turbine-fan assembly.

As becomes apparent from the above description, the invention relates to systems, devices and methods for propelling a turbine and a fan (blower and/or compressor) for transporting one or more selected from fuel, air, and/or off-gas, such as anode off-gas and/or cathode off-gas. As disclosed above, the turbine is preferably coaxially connected to said fan. In a preferred embodiment, at least anode off-gas is transported. In other embodiments, anode off-gas and one or both selected from air and/or fuel is transported using one or several turbine-fan assemblies. In a particular embodiment, the system comprises a turbine-fan assembly for transporting cathode off-gas.

The system of the invention may comprise separate assemblies as necessary for assuring proper start-up, for example for providing heat to one or more selected from the reformer, anode, cathode, and so forth, until the required operation temperatures are reached and/or for providing deionized water until such water is generated in sufficient amounts in the anode. In Figure 2, cathode air heater or burner 130 is provided. The cathode air heater is provided downstream the cathode and is preferably provided with fuel supply 131. The heater 130 heats the air exiting the cathode (cathode off-gas) until the latter is sufficiently hot so as to be able to heat the air drawn in via the air inlet 20 in heat exchanger 85, thereby being able to adjust the temperature of the air supplied from the air supply 20 to the required temperature.

Exemplary operating temperatures are provided hereinafter. These operating conditions may apply, for example, to a small-scale system producing 1-10 kW of electricity.

In an embodiment, the temperature of the fuel and the air received at the fuel and air inlets are about 20 °C. At the entry of the SOFC stack, the temperature of both may be adjusted to about 680 °C, for example. At the exit of the stack, the anode and cathode off-gases may have a temperature of 790 °C. At the inlet of the fan 202 of the turbine-fan assembly 200 in Fig. 1, the temperature of the recirculated anode off-gas is preferably around 200 °C, but could potentially be higher, up to the temperature of the anode outlet.

Turning to exhaust temperatures, the cathode exhaust leaving the system at exit 150 may have a temperature of 60 °C and the anode exhaust leaving the system after condenser 800 at exit 250 may have a temperature of about 50 °C. The water waste at outlet 806 (Fig. 2) may also have a temperature of about 50 °C, for example.

In an embodiment, the SOFC system is adapted and/or configured to provide electrical power of about 0.5-20kW, preferably 1-15 kW, most preferably 1-10 kW.

While certain of the preferred embodiments of the present invention have been described and specifically exemplified above, it is not intended that the invention be limited to such embodiments.

## Claims

1. A Solid Oxide Fuel Cell (SOFC) system (1, 11) comprising:
- an SOFC (100) having an anode (110) and a cathode (120);
- a fuel inlet (10) arranged to supply fuel to the anode (110);
- an air inlet (20) arranged to supply air to the cathode (120);
- a first valve (180) provided downstream said anode, said first valve being arranged for separating first and second portions of an anode off-gas emitted form an anode outlet;
- an anode off-gas recirculation assembly, circuit or duct (140) branching from said first valve (180) and arranged for receiving said second portion of anode off-gas;
- an evaporator assembly (190) arranged for producing steam from water;
- a turbine-fan assembly (200) comprising:
- a steam-driven rotatable turbine (201) and a rotatable fan (202), coaxially connected to said turbine , wherein said fan is arranged so as to bring about the transport of said second portion of anode off-gas towards a second valve or mixer (600), where said second portion of anode off-gas is mixed with fuel from said fuel inlet;
- a condenser (800), arranged for condensing water contained in said first portion of anode off-gas, a conduct (802) for feeding said condensed water to said evaporator assembly, and a conduct (811) for feeding said steam to said turbine for driving said turbine and thereby driving said turbine-fan assembly.

2. The SOFC system (1, 11) of claim 1, wherein said fan of said turbine-fan assembly is arranged:
a) with said anode off-gas recirculation assembly so as to pump said second portion of anode off-gas towards said second valve or mixer; or,
b) in a sucking mode down-stream said second valve or mixer for sucking said second portion of anode off-gas towards said second valve or mixer.

3. The SOFC system (1, 11) of claim 1 or 2, comprising a water recirculation assembly, circuit and/or duct (210) arranged downstream the turbine for conducting steam to the condenser (800) thereby rendering water in said steam available for said evaporator assembly.

4. The SOFC system (1, 11) of claim 3, wherein said water recirculation assembly comprises a duct for joining said steam and said anode off-gas or burner off-gas at a position (220) downstream said turbine and upstream said condenser, thereby increasing the steam content in said anode off-gas or burner off-gas.

5. The SOFC system (1, 11) of any one of the preceding claims, which is configured such that:
- water for producing steam in said evaporator assembly is produced entirely in said anode and/or contained on said anode off-gas;
- wherein said system lacks an external supply of deionized water for operating a reformer; and/or
- wherein said system lacks an external supply of water for driving said turbine (201).

6. The SOFC system (1, 11) of any one of the preceding claims, comprising a heater (230) arranged with said condenser for heating a fluid from an external source, preferably a liquid fluid, most preferably tap water.

7. The SOFC system (1, 11) of any one of the preceding claims, comprising a second air inlet (30), arranged for receiving air from the environment or from a separate source and for feeding said air to the burner (300) for providing oxygen for burning said anode off-gas.

8. The SOFC system (1, 11) of any one of the preceding claims, which lacks a junction for merging anode off-gas and cathode off-gas and/or which lacks a burner receiving cathode off-gas.

9. The SOFC system (1, 11) of any one of the preceding claims, wherein anode and cathode circuits are separate.

10. The SOFC system (1, 11) of any one of the preceding claims, wherein said turbine-fan assembly comprises a rotatable shaft (203) for coupling the turbine and the fan, and a gas-lubricated bearing (205).

11. The SOFC system (1, 11) of claim 10, wherein said rotatable shaft is levitated by way of said steam produced by the evaporator assembly and used to drive said turbine.

12. The SOFC system (1, 11) of any one of the preceding claims, **characterized in that** it involves a leakage of steam produced by said evaporator assembly (190) into the second portion of said anode off-gas.

13. The SOFC system (1, 11) of claim 12, wherein said leakage is provided by and/or in said turbine-fan assembly, preferably through said steam-lubricated bearing.

14. A method for operating an SOFC system (1, 11) comprising:
- reforming a gaseous fuel and steam into a hydrogen rich gas;
- electrochemically reacting said hydrogen rich gas and a cathode air stream in an SOFC to produce electricity, heat and steam;
- separating an anode off-gas comprising steam resulting from said electrochemical reaction into at least first and second portions;
- operating a turbine-fan assembly (200) comprising rotatable turbine (201) and a rotatable fan (202);
- transporting said second portion of anode off-gas with said fan (202) and mixing said second portion of anode off-gas with said gaseous fuel, thereby providing said steam for reforming the gaseous fuel;
- condensing steam contained in said first portion of said anode off-gas, and separating anode-off-gas from water obtained by said condensation;
- evaporating said water so as to obtain steam; and,
- driving said turbine (201) with said steam.

15. A method for propelling a turbine (201) and/or a fan (202) for transporting one or more selected from a fuel, air and off-gas, such as anode-and/or cathode off-gas, the method comprising producing steam from water produced in an anode (110) of an SOFC (100) and propelling said turbine (201) and/or fan (202) using said steam, wherein said steam is used to rotate a turbine of a turbine-fan assembly, and wherein said turbine and/or fan is propelled by the rotation of said turbine.

## Patentansprüche

1. Festoxidbrennstoffzellensystem (1, 11), das folgendes umfasst:
- eine Festoxidbrennstoffzelle (SOFC) (100) mit einer Anode (110) und einer Kathode (120);
- einen Brennstoffeinlass (10), der so angeordnet ist, dass er die Anode (110) mit Brennstoff versorgt;
- einen Lufteinlass (20), der so angeordnet ist, dass er die Kathode (120) mit Luft versorgt;
- ein erstes Ventil (180) stromabwärts der Anode, das so angeordnet ist, dass es den ersten und den zweiten Teil des aus einem Anodenausgang austretenden Anodenrestgases voneinander trennt;
- eine Rückführungsanordnung für das Anodenrestgas, einen Kreislauf oder eine Leitung (140), die am ersten Ventil (180) abzweigt und so angeordnet ist, dass sie den zweiten Teil des Anodenrestgases aufnimmt;
- eine Verdampferanordnung (190), die so angeordnet ist, dass sie Dampf aus Wasser erzeugt;
- eine Turbinen-Lüfter-Anordnung (200), die folgendes umfasst:
- eine dampfbetriebene Drehturbine (201) und einen koaxial mit der Turbine verbundenen Drehlüfter (202), wobei der Lüfter so angeordnet ist, dass der zweite Teil des Anodenrestgases zu einem zweiten Ventil oder Mischer (600) befördert wird, wo der zweite Teil des Anodenrestgases mit Brennstoff aus dem Brennstoffeinlass vermischt wird;
- einen Kondensator (800), der so angeordnet ist, dass er das im ersten Teil des Anodenrestgases enthaltene Wasser kondensiert, eine Leitung (802), um das kondensierte Wasser der Verdampferanordnung zuzuführen, und eine Leitung (811), um den Dampf der Turbine zuzuführen und die Turbinen-Lüfter-Anordnung damit anzutreiben.

2. Festoxidbrennstoffzellensystem (1, 11) nach Anspruch 1, in dem der Lüfter der Turbinen-Lüfter- Anordnung:
a) mit der Rückführungsanordnung für das Anodenrestgas so angeordnet ist, dass der zweite Teil des Anodenrestgases zum zweiten Ventil oder Mischer gepumpt wird; oder,
b) in einem Saugmodus stromabwärts des zweiten Ventils oder des Mischers angeordnet ist, so dass der zweite Teil des Anodenrestgases in Richtung des zweiten Ventils oder des Mischers gesaugt wird.

3. Festoxidbrennstoffzellensystem (1, 11) nach Anspruch 1 oder 2, das eine Anordnung, einen Kreislauf und/oder eine Leitung zur Rückführung von Wasser (210) umfasst, wobei diese stromabwärts der Turbine angeordnet ist, um den Dampf dem Kondensator (800) zuzuführen, und somit das Wasser des Dampfes für die Verdampferanordnung zur Verfügung zu stellen.

4. Festoxidbrennstoffzellensystem (1, 11) nach Anspruch 3, in dem die Wasserrückführungsanordnung eine Leitung zum Zusammenführen des Dampfs und des Anodenrestgases oder Brennerrestgases an einer Stelle (220) stromabwärts der Turbine und stromaufwärts des Kondensators umfasst, wodurch der Dampfgehalt im Anodenrestgas bzw. Brennerrestgas erhöht wird.

5. Festoxidbrennstoffzellensystem (1, 11) nach einem beliebigen der vorhergehenden Ansprüche, das so gestaltet ist, dass:
- das Wasser zur Erzeugung des Dampfes in der Verdampferanordnung vollständig in der Anode erzeugt wird und/oder im Anodenrestgas enthalten ist;
- das System mit keiner externen Versorgung mit entionisiertem Wasser zum Betreiben eines Reformers versehen ist; und/oder
- das System keine externe Wasserzufuhr zum Antreiben der Turbine (201) hat.

6. Festoxidbrennstoffzellensystem (1, 11) nach einem beliebigen der vorhergehenden Ansprüche, welches einen Erhitzer (230) umfasst, der mit dem Kondensator so angeordnet ist, dass ein Fluid aus einer externen Quelle, vorzugsweise ein flüssiges Fluid, und idealerweise Leitungswasser, erhitzt werden kann.

7. Festoxidbrennstoffzellensystem (1, 11) nach einem beliebigen der vorhergehenden Ansprüche, das einem zweiten Lufteinlass (30) umfasst, der so angeordnet ist, dass er Luft aus der Umgebung oder einer separaten Quelle aufnehmen und dem Brenner (300) zuführen kann, um Sauerstoff zum Verbrennen des Anodenrestgases zu liefern.

8. Festoxidbrennstoffzellensystem (1, 11) nach einem beliebigen der vorhergehenden Ansprüche, das keine Verbindung zum Zusammenführen des Anoden- und Kathodenrestgases enthält und/oder keinen Brenner zur Aufnahme des Kathodenrestgases.

9. Festoxidbrennstoffzellensystem (1, 11) nach einem beliebigen der vorhergehenden Ansprüche, in dem der Anoden- und der Kathodenkreislauf voneinander getrennt sind.

10. Festoxidbrennstoffzellensystem (1, 11) nach einem beliebigen der vorhergehenden Ansprüche, in dem die Turbinen-Lüfter-Anordnung eine rotierende Achse (203) zum Koppeln von Turbine und Lüfter sowie ein gasgeschmiertes Lager (205) umfasst.

11. Festoxidbrennstoffzellensystem (1, 11) nach Anspruch 10, in dem die rotierende Achse mithilfe des von der Verdampferanordnung erzeugten und zum Antrieb der Turbine verwendeten Dampfes in die Schwebe gebracht wird.

12. Festoxidbrennstoffzellensystem (1, 11) nach einem beliebigen der vorhergehenden Ansprüche, **dadurch gekennzeichnet, dass** ein Auslauf des von der Verdampferanordnung (190) erzeugten Dampfes in den zweiten Teil des Anodenrestgases involviert ist.

13. Festoxidbrennstoffzellensystem (1, 11) nach Anspruch 12, in dem der Auslauf über und/oder in der Turbinen-Lüfter-Anordnung vorzugsweise durch das dampfgeschmierte Lager bewerkstelligt wird.

14. Verfahren zum Betreiben eines Festoxidbrennstoffzellensystems (1, 11), das folgendes umfasst:
- die Reformierung eines gasförmigen Brennstoffs und von Dampf zu einem wasserstoffreichen Gas;
- die elektrochemische Reaktion des wasserstoffreichen Gases und eines Kathodenluftstroms in einer Festoxidbrennstoffzelle zur Erzeugung von Strom, Wärme und Dampf;
- die Trennung des Anodenrestgases, das den aus der elektrochemischen Reaktion resultierenden Dampf enthält, in mindestens einen ersten und einen zweiten Teil;
- das Betreiben einer Turbinen-Lüfter-Anordnung (200), die eine Drehturbine (201) und einen Drehlüfter (202) umfasst;
- die Beförderung des zweiten Teils des Anodenrestgases mit dem Lüfter (202) und das Mischen des zweiten Teils des Anodenrestgases mit dem gasförmigen Brennstoff, wodurch der Dampf zur Reformierung des gasförmigen Brennstoffs geliefert wird;
- das Kondensieren des im ersten Teil des Anodenrestgases enthaltenen Dampfes und das Trennen des Anodenrestgases von dem durch Kondensation erhaltenen Wasser;
- die Verdampfung des Wassers, um Dampf zu erhalten; und,
- das Antreiben der Turbine (201) mit dem Dampf.

15. Verfahren zum Antreiben einer Turbine (201) und/oder eines Lüfters (202), um ein oder mehrere Elemente zu transportieren, die ausgewählt werden aus Brennstoff, Luft und Restgas, wie z.B. Anoden- und/oder Kathodenrestgas, wobei das Verfahren die Erzeugung von Dampf aus Wasser, das in einer Anode (110) einer Festoxidbrennstoffzelle (100) erzeugt wird, und das Antreiben der Turbine (201) und/oder des Lüfters (202) unter Verwendung dieses Dampfes umfasst, wobei der Dampf verwendet wird, um die Turbine einer Turbinen-Lüfter-Anordnung zu drehen, und die Turbine und/oder der Lüfter durch die Drehung der Turbine angetrieben wird/werden.

## Revendications

1. Système de pile à combustible à oxyde solide (SOFC) (1, 11) comprenant :
- une SOFC (100) ayant une anode (110) et une cathode (120) ;
- une entrée de carburant (10) agencée pour fournir du carburant à l'anode (110) ;
- une entrée d'air (20) agencée pour fournir de l'air à la cathode (120) ;
- une première soupape (180) prévue en aval de ladite anode, ladite première soupape étant agencée pour séparer des première et seconde parties d'un gaz résiduel d'anode émis depuis une sortie d'anode ;
- un ensemble de recirculation du gaz résiduel d'anode, un circuit ou un conduit (140) se ramifiant à partir de ladite première soupape (180) et agencé pour recevoir ladite seconde partie du gaz résiduel d'anode ;
- un ensemble évaporateur (190) agencé pour produire de la vapeur à partir d'eau ;
- un ensemble turbine-ventilateur (200) comprenant :
- une turbine rotative (201) entraînée par la vapeur et un ventilateur rotatif (202), relié coaxialement à ladite turbine, dans lequel ledit ventilateur est agencé de manière à transporter ladite seconde partie du gaz résiduel d'anode vers une seconde soupape ou mélangeur (600), où ladite seconde partie du gaz résiduel d'anode est mélangée avec du carburant provenant de ladite entrée de carburant ;
- un condenseur (800), agencé pour condenser l'eau contenue dans ladite première partie du gaz résiduel d'anode, un conduit (802) pour amener ladite eau condensée audit ensemble évaporateur, et un conduit (811) pour amener ladite vapeur à ladite turbine pour entraîner ladite turbine et entraîner ainsi ledit ensemble turbine-ventilateur.

2. Système SOFC (1, 11) selon la revendication 1, dans lequel ledit ventilateur dudit ensemble turbine-ventilateur est disposé :
a) avec ledit ensemble de recirculation du gaz résiduel d'anode de manière à pomper ladite seconde partie du gaz résiduel d'anode vers ladite seconde soupape ou mélangeur ; ou,
b) dans un mode d'aspiration en aval de ladite seconde soupape ou dudit mélangeur pour aspirer ladite seconde partie de gaz résiduel d'anode vers ladite seconde soupape ou ledit mélangeur.

3. Système SOFC (1, 11) selon la revendication 1 ou 2, comprenant un ensemble, un circuit et / ou un conduit de recirculation d'eau (210) disposé en aval de la turbine pour conduire de la vapeur vers le condenseur (800), rendant ainsi l'eau de ladite vapeur disponible pour ledit ensemble évaporateur.

4. Système SOFC (1, 11) selon la revendication 3, dans lequel ledit ensemble de recirculation de l'eau comprend un conduit pour joindre ladite vapeur et ledit gaz résiduel d'anode ou le gaz résiduel d'un brûleur à une position (220) en aval de ladite turbine et en amont dudit condenseur, augmentant ainsi la teneur en vapeur dans ledit gaz résiduel d'anode ou le gaz résiduel du brûleur.

5. Système SOFC (1, 11) selon l'une quelconque des revendications précédentes, qui est configuré de telle sorte que :
- l'eau pour produire de la vapeur dans ledit ensemble évaporateur est produite entièrement dans ladite anode et / ou contenue dans ledit gaz résiduel d'anode ;
- dans lequel ledit système est dépourvu d'une alimentation externe en eau désionisée pour faire fonctionner un reformeur ; et / ou
- dans lequel ledit système manque d'une alimentation externe en eau pour entraîner ladite turbine (201).

6. Système SOFC (1, 11) selon l'une quelconque des revendications précédentes, comprenant un réchauffeur (230) disposé avec ledit condenseur pour chauffer un fluide provenant d'une source externe, de préférence, un fluide liquide, plus de préférence, de l'eau du robinet.

7. Système SOFC (1, 11) selon l'une quelconque des revendications précédentes, comprenant une seconde entrée d'air (30), agencée pour recevoir de l'air de l'environnement ou d'une source séparée et pour alimenter ledit air au brûleur (300) afin de fournir de l'oxygène pour brûler ledit gaz résiduel d'anode.

8. Système SOFC (1, 11) selon l'une quelconque des revendications précédentes, qui est dépourvu d'une jonction de fusion du gaz résiduel anodique et cathodique et / ou qui est dépourvu d'un brûleur recevant le gaz résiduel cathodique.

9. Système SOFC (1, 11) selon l'une quelconque des revendications précédentes, dans lequel les circuits anodique et cathodique sont séparés.

10. Système SOFC (1, 11) selon l'une quelconque des revendications précédentes, dans lequel ledit ensemble turbine-ventilateur comprend un arbre rotatif (203) pour coupler la turbine et le ventilateur, et un palier lubrifié au gaz (205).

11. Système SOFC (1, 11) selon la revendication 10, dans lequel ledit arbre rotatif est mis en lévitation au moyen de ladite vapeur produite par l'ensemble évaporateur et utilisée pour entraîner ladite turbine.

12. Système SOFC (1, 11) selon l'une quelconque des revendications précédentes, **caractérisé en ce qu'**il implique une fuite de vapeur produite par ledit ensemble évaporateur (190) dans la seconde partie dudit gaz résiduel d'anode.

13. Système SOFC (1, 11) selon la revendication 12, dans lequel ladite fuite est fournie par et / ou dans ledit ensemble turbine-ventilateur, de préférence, à travers ledit palier lubrifié à la vapeur.

14. Procédé pour faire fonctionner un système SOFC (1, 11) comprenant :
- le reformage d'un combustible gazeux et de vapeur en un gaz riche en hydrogène ;
- la réaction électrochimique dudit gaz riche en hydrogène et d'un courant d'air cathodique dans une SOFC pour produire de l'électricité, de la chaleur et de la vapeur ;
- la séparation d'un gaz résiduel d'anode comprenant de la vapeur résultant de ladite réaction électrochimique en au moins une première et une seconde parties ;
- le fonctionnement d'un ensemble turbine-ventilateur (200) comprenant une turbine rotative (201) et un ventilateur rotatif (202) ;
- le transport de ladite seconde partie de gaz résiduel d'anode par ledit ventilateur (202) et le mélange de ladite seconde partie de gaz résiduel d'anode avec ledit combustible gazeux, fournissant ainsi ladite vapeur pour reformer le combustible gazeux ;
- la condensation de la vapeur contenue dans ladite première partie dudit gaz résiduel d'anode, et la séparation du gaz résiduel d'anode de l'eau obtenue par ladite condensation ;
- l'évaporation de ladite eau de manière à obtenir de la vapeur ; et,
- l'entraînement de ladite turbine (201) avec ladite vapeur.

15. Procédé de propulsion d'une turbine (201) et / ou d'un ventilateur (202) pour transporter un ou plusieurs éléments sélectionnés parmi un combustible, de l'air et un gaz résiduel, tel qu'un gaz résiduel d'anode et / ou de cathode, le procédé comprenant la production de vapeur à partir d'eau produite dans une anode (110) d'une SOFC (100) et la propulsion de ladite turbine (201) et / ou dudit ventilateur (202) en utilisant ladite vapeur, dans lequel ladite vapeur est utilisée pour faire tourner une turbine d'un ensemble turbine-ventilateur, et dans lequel ladite turbine et / ou ledit ventilateur est / sont propulsé(s) par la rotation de ladite turbine.
